**Europäisches Patentamt**

(19) **European Patent Office**

**Office européen des brevets**

(11) Numéro de publication: **0 109 879**
**B1**

(12) # FASCICULE DE BREVET EUROPEEN

(45) Date de publication du fascicule du brevet:
**28.12.88**

(51) Int. Cl.⁴: **E 04 D 3/35**

(21) Numéro de dépôt: **83402102.4**

(22) Date de dépôt: **27.10.83**

(54) Procédé et dispositifs pour la fabrication de panneaux isolants d'étanchéité de toiture.

(30) Priorité: **29.10.82 FR 8218166**

(43) Date de publication de la demande:
**30.05.84 Bulletin 84/22**

(45) Mention de la délivrance du brevet:
**28.12.88 Bulletin 88/52**

(84) Etats contractants désignés:
**AT BE CH DE FR GB IT LI LU NL SE**

(56) Documents cités:
**FR-A- 2 369 395**
**GB-A- 718 782**
**GB-A- 1 060 688**
**US-A- 3 082 143**
**US-A- 3 922 425**

(73) Titulaire: **ISOVER SAINT-GOBAIN, Les Miroirs 18, avenue d'Alsace, F-92400 Courbevoie (FR)**

(72) Inventeur: **Cousin, Stéphane, 124 avenue Charles de Gaulle, F-60260 Lamorlaye (FR)**
Inventeur: **Boumendil, Jean-Paul, 132 rue du Faubourg Saint-Denis, F-75010 Paris (FR)**

(74) Mandataire: **de Toytot, Robert et al, SAINT-GOBAIN RECHERCHE 39 quai Lucien Lefranc, F-93300 Aubervilliers (FR)**

## Description

La présente invention se rapporte à un procédé et un dispositif de fabrication de panneaux constitués principalement d'un matériau isolant, tel que feutre de fibres liées entre elles, et dont l'une des faces comporte un revêtement approprié notamment pour recevoir au moins une couche d'un matériau d'étanchéité résistant aux intempéries. Un procédé et un dispositif de ce genre correspondant aux préambules des revendications 1 et respectivement 21 sont connus du document FR-A-2 025 428.

Des panneaux de ce type sont déjà connus, en particulier, pour des toitures de faibles pentes, pour servir à la fois de matériau d'isolation et de support pour des revêtements d'étanchéité, notamment bitumineux.

Ainsi, certains panneaux déjà connus comportent un feutre de fibres minérales liées entre elles, présentant une densité suffisante pour conférer au panneau une rigidité importante tout en conservant au produit des qualités satisfaisantes d'isolation, et un revêtement constitué d'un voile de fibres de verre imprégné de bitume et, en face externe, d'une feuille de papier kraft.

De tels panneaux présentent cependant divers inconvénients, tels que le fait que la liaison entre le feutre et les revêtements d'étanchéité ultérieurement déposés sur les panneaux après l'assemblage manque d'homogénéité par suite de l'interposition de la feuille de papier kraft, et de sa sensibilité à l'humidité.

On connait aussi, notamment par les brevets US 3 922 425 et FR 2 025 428, un panneau comportant un feutre de fibres minérales dont une ou plusieurs faces sont imprégnées par du bitume et revêtues d'une mince pellicule d'un agent de séparation, tel qu'une matière thermoplastique, susceptible d'être éliminée, en tout ou partie, par arrachement, fusion, combustion ou dissolution dans les bitumes fondus utilisés pour les revêtements ultérieurs d'étanchéité. Une telle matière thermoplastique est de préférence à choisir dans le groupe des polyéthylènes et des polypropylènes de basses et moyennes densités et à utiliser sous la forme de feuille d'épaisseur de l'ordre de la dizaine de microns.

Cependant ces diverses productions présentent certains inconvénients, aussi bien au plan de la mise en œuvre du procédé de fabrication, qu'à celui des propriétés des produits obtenus, et notamment à celles directement liées audit procédé.

En effet, selon le procédé des brevets cités ci-dessus, et plus particulièrement le brevet FR 2 025 428, l'imprégnation du feutre de fibres minérales est obtenue en déversant sur ledit feutre, à partir de la fente d'un enduiseur, un rideau mince et continu de bitume fondu. Or, la pénétration du bitume est fonction de nombreux facteurs, notamment la quantité présente par unité de surface, la fluidité du produit et donc aussi sa température, la porosité du feutre, et sa température propre, etc... Cette pénétration présente donc généralement une notable hétérogénéité. C'est ainsi que la couche de surface, qui selon la première variante du procédé est constituée d'un mélange de fibres d'isolation de type usuel et de fils textiles hachés, peut être seulement partiellement imprégnée, ou au contraire représenter une faible part de la région du panneau effectivement soumise à l'imprégnation. Il en résulte pour le produit fini des propriétés hétérogènes, notamment en matière d'isolation, d'étanchéité, de résistance mécanique, d'aptitude au collage, etc...

Revenant au procédé proposé par ledit brevet français, on doit remarquer qu'il est d'une mise en œuvre posant de délicats problèmes quant à la précision des dosages, aussi bien dans l'espace que dans le temps.

De tels problèmes se posent en effet dès la fabrication du feutre lui-même, puisqu'il convient, pour obtenir sa couche supérieure renforcée, d'assurer une distribution homogène des fibres hachées qui y sont introduites. Des problèmes de dosage et de répartition se posent à nouveau par la suite, lors de l'imprégnation du feutre par le bitume, du fait des nombreux paramètres intervenant dans ce processus, comme il a été dit plus haut.

D'autre part, le bitume étant un produit très salissant, sa distribution directement sur le feutre rigide défilant au-dessous de la fente de l'enduiseur ne permet pas d'imprégner correctement ses bords latéraux sans risquer de souiller le dispositif de transfert. Enfin, à fortiori, l'imprégnation des rives inférieures n'est pas envisageable par application directe du procédé décrit.

La présente invention se propose de remédier à ces divers inconvénients.

Elle a pour objet un procédé de fabrication d'un panneau fibreux pour isolation et étanchéité destiné à être revêtu d'au moins un enduit ou une chape bitumineux applicables à chaud, comportant la préparation, sous la forme d'un ruban se déplaçant en continu sur un convoyeur, d'un matelas de fibres minérales contenant un premier liant, de type thermodurcissable, finement dispersé en son sein, la mise en compression dudit matelas suivie d'un traitement assurant la prise dudit premier liant et la stabilisation de la masse volumique du feutre dense ainsi obtenue, un deuxième liant de type thermoplastique étant ensuite apporté à la surface dudit feutre sur au moins l'une de ses faces principales, et ladite face étant recouverte, au moins partiellement, d'un revêtement d'étanchéité adhérant audit feutre par l'intermédiaire dudit deuxième liant, ledit ruban de feutre ainsi revêtu étant soumis à un refroidissement assurant le durcissement dudit deuxième liant, avant découpe éventuelle dudit ruban en panneaux unitaires, ce procédé se distinguant plus spécialement de l'art connu en ce que ledit revêtement d'étanchéité est préparé en continu par superposition d'un voile de renforcement, en ruban, préalablement imprégné à chaud à l'aide dudit deuxième liant thermoplastique, et d'un agent de séparation imperméable, également en ruban, susceptible d'adhérer audit voile par l'intermédiaire dudit deuxième liant, puis en ce que ledit ruban composite d'étanchéité est appliqué en continu sur au moins ladite face principale, de préférence l'ensemble des faces dudit ruban de feutre, ledit voile de renforcement venant adhérer au contact de ladite face principale par l'intermédiaire dudit deuxième liant.

L'invention a également pour objet un dispositif permettant la fabrication en continu selon le procédé ci-dessus de panneaux fibreux pour isolation et étanchéité de toitures destinés à être revêtus, après pose sur le toit à traiter, d'au moins un enduit ou une chape bitumineux applicables à chaud, comprenant un convoyeur sensiblement horizontal, par exemple à rouleaux, pour amener en continu un ruban de feutre vers un poste d'application d'un ruban de revêtement d'étanchéité comportant un tambour d'application, des moyens conformateurs et des moyens de refroidissement permettant d'obtenir la stabilité dimensionnelle du ruban porteur du revêtement, des moyens, tels qu'un massicot, de découpe du ruban revêtu en panneaux individualisés, et un convoyeur pour l'évacuation desdits panneaux, dans lequel ledit tambour d'application est disposé au-dessous de la face inférieure dudit ruban de feutre, et est muni de moyens d'alimentation en un ruban de fibres minérales imprègné dudit deuxième liant, du type thermoplastique, et en un ruban d'agent de séparation constituant en combinaison un ruban composite de revêtement s'interposant entre ledit ruban de feutre et ledit tambour d'application lui servant de support, ledit voile imprégné et ledit agent de séparation venant au contact, respectivement, dudit ruban et dudit tambour.

La mise en œuvre dudit deuxième liant, de type thermoplastique, dans les conditions caractéristiques de l'invention, permet une imprégnation très homogène des diverses faces du ruban de feutre revêtues du ruban composite d'étanchéité, et exclut ou tout ou moins réduit grandement, les risques de souillure du dispositif de transfert par ledit liant thermoplastique.

Dans une forme préférée de mise en œuvre, ledit deuxième liant de type thermoplastique appartient avantageusement à la famille des bitumes, dont, de préférence encore, les caractéristiques de viscosité en fonction de la température sont situées dans les fourchettes suivantes: température «bille et anneau» selon la norme française T 66 008 comprise entre 70 et 100°C et de préférence de l'ordre de 85°C, et pénètrabilité selon la norme française T 66 004 de l'ordre de 25 (l'unité de mesure étant égale à 0,1 mm).

De préférence aussi, le voile de renforcement est constitué de fibres de verre, entremêlées et liées entre elles, et comporte avantageusement en outre une chaîne de fils de renfort. Le diamètre des fibres du voile de renforcement sera par exemple avantageusement compris entre 6 et 20 micromètres, et les fils de chaîne seront constitués de fils de silionne de 60 à 80 Tex formés de filaments de diamètre compris entre 7 et 20 micromètres. La masse surfacique du voile peut avantageusement être de 30 à 200 g/m², et de préférence de l'ordre de 50 à 100 g/m², et la quantité de bitume d'imprégnation de 1000 à 2000 g/m², et de préférence 1300 à 1500 g/m².

Le premier liant assurant la tenue mécanique du matelas de feutre de fibres minérales est avantageusement du type phénol-formaldéhyde, tel que bien connu pour de tels feutres, mais d'autres matières telles que résines époxy, urée, etc... peuvent également convenir, dans la mesure où le deuxième liant choisi n'est pas incompatible avec elles.

Le feutre lui-même peut être constitué de fibres de verre ou de laine de roche, et le durcissement du liant par effet thermique est assuré après l'avoir comprimé de manière qu'il présente une densité telle que ses qualités d'isolant seront cependant encore de très bon niveau, avec par exemple une conductivité thermique comprise entre 0,03 et 0,06 W/m.K, alors que ses performances mécaniques atteindront les hautes valeurs recherchées pour les emplois visés par ces produits. Par exemple, on considèrera comme très satisfaisant un feutre présentant, pour une épaisseur de 30 mm, une flèche entre appuis libres distants de 1 m de l'ordre de quelques millimètres et une résistance de poinçonnement de l'ordre de 100 daN selon le test du CSTB de poinçonnement en portée libre sur un support présentant une largeur de vallée de 50 mm.

De telles performances sont normalement obtenues avec des feutres de masse volumique comprise entre 120 et 250 kg/m³ (de préférence de l'ordre de 150 kg/m³).

En outre, pour couvrir les usages les plus fréquents, l'épaisseur du matelas de feutre compris dans le panneau selon l'invention est comprise entre 2 et 15 cm.

Dans une forme préférée de mise en œuvre du procédé de l'invention, l'agent de séparation complétant le revêtement externe d'une au moins des faces du panneau est constitué d'une couche d'une matière thermoplastique de bonne stabilité dimensionnelle jusqu'à une température au moins égale à la température «bille et anneau» dudit deuxième liant et fusible à une température permettant le nappage des produits d'étanchéité destinés à constituer les ultimes couches d'étanchéité après mise en place définitive des panneaux selon l'invention sur une toiture ou une terrasse.

De préférence encore, l'agent de séparation est choisi tel qu'il soit susceptible de disparaître sous l'action de la chaleur, soit qu'il fonde et se dissolve dans le produit constituant ledit deuxième liant, ou qu'il se rétracte, ou encore qu'il brûle, ou se décompose, de telle sorte qu'il se produise une union étroite entre le bitume imprégnant le voile de renforcement et lesdites nappes ultérieures d'étanchéité.

Les produits avantageux pour constituer ledit agent de séparation appartiennent au groupe des polyoléfines, et on choisira avantageusement des polyéthylènes et polypropylènes de basse ou moyenne densité, et de préférence des polypropylènes isotactiques bi-orientés.

Des feuilles de polyesters de 5 à 20 micromètres peuvent également convenir, bien que leur comportement à la chaleur soit différent.

De préférence, ces produits seront utilisés sous forme de feuls ou pellicules, dont l'épaisseur sera comprise avantageusement entre 5 et 20 micromètres, de préférence de l'ordre de 12,5 micromètres, mais peuvent également être appliqués sous forme de non tissés, ou de poudre projetée.

Selon l'invention, le revêtement du feutre, comprenant un voile de renforcement et un agent de séparation, tels qu'ils viennent d'être décrits, est appliqué non seulement sur l'une des faces principales du matelas de feutre, mais aussi, de préférence, sur deux faces longitudinales opposées, et, de préférence encore, en sous-face, sur une largeur notable, c'est-à-dire par exemple de l'ordre de grandeur de l'épaisseur du matelas lui-même, ou en tout cas d'environ 2 cm, l'agent de séparation devant recouvrir toutes les surfaces du matelas ayant reçu bitume.

De préférence, les surfaces du matelas ainsi revêtues en sous-face présentent, préalablement à l'application dudit revêtement, un manque de matière, obtenu par exemple par meulage, pour éviter toute surépaisseur du panneau fini à ce niveau, et pour réaliser un meilleur collage du voile de renforcement imprégné de bitume.

En pratique, le procédé de l'invention prévoit avantageusement d'appliquer le revêtement d'étanchéité sur la face inférieure, à titre de face principale, plutôt que sur la face supérieure du ruban continu de feutre, en particulier lorsque l'agent de séparation est constitué d'un feuil de matière thermoplastique. Un tel mode opératoire permet en effet, comme on le comprendra facilement par l'exemple d'exécution du procédé selon l'invention qui sera décrit plus loin en détail, de maîtriser aisément la mise en œuvre de l'imprégnation du voile par le bitume, puis de son application et de son collage sur le feutre, et, dans le même temps, du collage du feuil de matière thermoplastique sur le voile lui-même, qui joue dès cet instant un rôle important d'agent de séparation entre le voile imprégné de bitume et le convoyeur, qui peut être ainsi maintenu parfaitement propre.

Il suffit pour cela que le feuil de séparation soit un ruban de largeur au moins égale et de préférence un peu supérieure à celle du ruban de voile imprégné de bitume.

Lorsque le panneau à fabriquer est du type «bordé», ou du type «rebordé», c'est-à-dire lorsque le revêtement composite comprenant le voile imprégné de bitume et le feuil de séparation n'intéresse pas seulement une face principale, mais en outre, respectivement, deux faces latérales, ou bien celles-ci et en plus une certaine largeur des rives de la seconde face principale, les rubans de voile et de feuil de séparation sont choisis de largeurs appropriées pour recouvrir lesdites surfaces du matelas de feutre, surfaces sur lesquelles lesdits rubans sont appliqués par des moyens adaptés, tels que guides ou molettes déflecteurs.

Après application du revêtement sur le ruban de feutre, celui-ci poursuit son chemin sur le convoyeur en exerçant, sous l'effet de son propre poids ou éventuellement avec l'aide de rouleaux presseurs, une certaine pression sur ledit revêtement, jusqu'à obtention d'un durcissement dudit revêtement suffisant pour procéder à la découpe transversale du ruban revêtu, par exemple par sciage, de manière à obtenir des panneaux facilement manipulables.

Les panneaux ainsi obtenus, et particulièrement les panneaux «bordés» ou, mieux encore, «rebordés», sont d'un emploi particulièrement avantageux pour l'isolation et l'étanchéité des toitures. Ils présentent une excellente résistance au pelage, c'est-à-dire à l'arrachement du revêtement, propriété recherchée pour lutter contre les effets du vent sur les chantiers de mise en œuvre sur les toitures. Ils se comportent également de manière tout à fait avantageuse lorsqu'on leur applique d'autres tests, tels que de résistance à la flexion, au poinçonnement (statique ou dynamique), à l'usure par frottement et compression, etc... en vue de comparer leur aptitude à l'emploi avec celle de produits destinés aux mêmes usages.

Les panneaux selon l'invention se posent de préférence à joints décalés, bord à bord, en mettant en œuvre un échauffement à la flamme des faces latérales revêtues – dans le cas des panneaux bordés ou rebordés – avant rapprochement et collage entre elles desdites faces latérales revêtues. On procède ensuite à une fixation mécanique des panneaux sur leur support, que celui-ci soit constitué d'une structure en tôle d'acier nervurée, en éléments de béton, ou en d'autre matériaux, à l'aide de moyens mécaniques tels que vis autoperceuse-taraudeuse, rivet avec ou sans entretoise, goujon soudé, etc... avec interposition de rondelles, préférablement.

Les revêtements d'étanchéité à appliquer ultérieurement sur un tel assemblage de panneaux sont avantageusement constitués de chapes ou de feuilles de bitume armées, ou de produits analogues, qui peuvent être soudés à la flamme sur les panneaux dans la mesure où le bitume desdits produits est choisi pour être compatible avec les matériaux constituant le revêtement propre des panneaux, à savoir le bitume d'imprégnation du voile de renforcement et le feuil de séparation, ce dernier devant, dans cette opération, fondre, se rétracter, brûler et/ou se dissoudre dans l'un ou l'autre des deux matériaux bitumineux en présence, afin de permettre l'union intime de ceux-ci.

La surface externe de tels revêtements d'étanchéité appliqués sur un assemblage de panneaux selon l'invention ne souffre pas sensiblement des variations des conditions climatiques et en particulier de température ambiante. Notamment, on n'observe pas l'effet de courbure dit de «tuilage» qui tend à apparaître avec les panneaux comportant un papier kraft comme agent de séparation.

Pour fixer les idées, une structure typique d'isolation et d'étanchéité de toiture à faible pente peut être constituée, à partir d'une dalle de béton, par exemple, des couches suivantes:

— un enduit d'application à chaud à base de bitume oxydé;

— un feutre bitumé d'épaisseur de l'ordre de 2 mm constitué d'un voile de fibres minérales imprégné de bitume à un taux d'environ 36 kg de bitume pour 20 m² et portant un semis de grains de sable sur ses deux faces;

— une nouvelle couche d'enduit d'application à chaud, telle que la première citée;

— un panneau selon l'invention;

— une ou deux membranes d'étanchéité bitumineuses, ou de composites bitumes-élastomères ou bitumes-polymères.

D'autres avantages et caractéristiques de la présente invention apparaîtront dans la description détaillée qui suit, faite en référence aux dessins annexés qui représentent:

— Figure 1: une vue schématique, en élévation, d'une ligne de fabrication de panneaux selon l'invention.

— Figure 2: une vue brisée en perspective d'un angle d'un panneau selon l'invention.

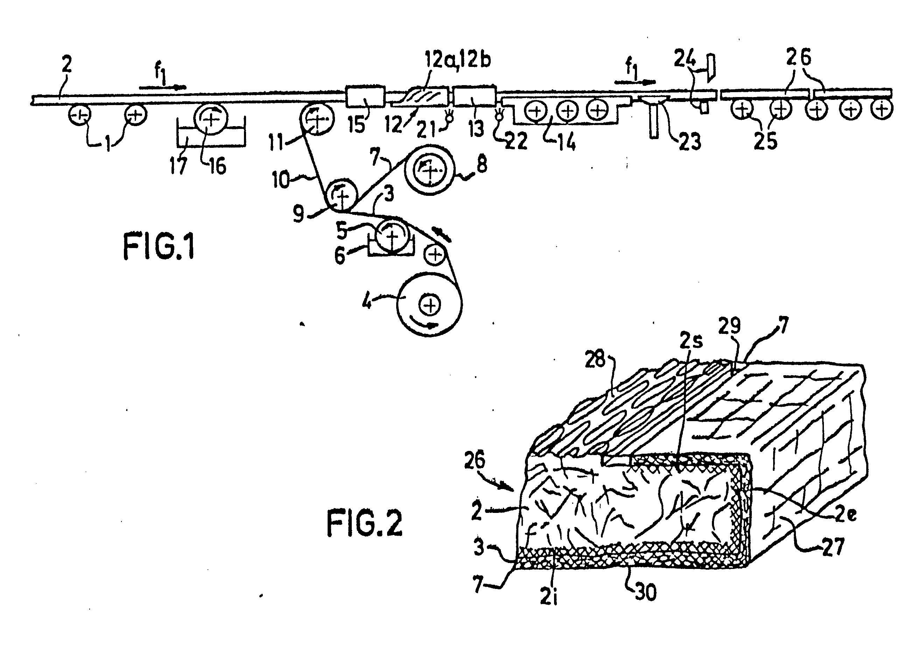

Le dispositif de la figure 1 représente un convoyeur à rouleaux 1, entraînant le ruban de feutre 2 dans le sens des flèches $f_1$. Le voile de renforcement 3, qui provient d'une bobine 4 éventuellement munie d'un dispositif de réglage de tension, est entraîné vers un tambour d'imprégnation 5 dont la partie inférieure plonge dans un bac 6 contenant le bitume utilisé comme deuxième liant, à l'état fondu. Ce bac comporte un dispositif de chauffage avec régulation de température. Un feuil 7, de polypropylène par exemple, provenant de la bobine 8 est mis au contact du voile imprégné 3 en s'interposant entre ledit voile et le tambour 9, puis le revêtement composite 10 ainsi obtenu vient s'interposer à son tour entre le ruban de feutre 2 et le tambour 11.

Une table 12 munie de déflecteurs-conformateurs 12a, 12b disposés de part et d'autre du ruban de feutre, en aval du tambour 11, permet d'appliquer les rives du ruban composite 10 sur les faces latérales et éventuellement sur la face supérieure du feutre 2.

Il est avantageusement prévu, en outre, selon l'invention, de munir la ligne de fabrication de panneaux, à la suite des déflecteurs-conformateurs 12a, 12b, de moyens de refroidissement 13, 14 provoquant le durcissement du bitume et la stabilisation dimensionnelle du ruban de feutre 2 porteur de son revêtement composite 10. Ces moyens sont constitués, par exemple, ainsi que représentés à la figure 1, par une ou plusieurs tables stabilisatrices refroidies 13, et par un ou plusieurs convoyeurs refroidis 14.

En amont de la table conformatrice 12, et la séparant du tambour 11 permettant l'application du revêtement composite 10 au contact de la face inférieure du ruban de feutre 2, une table et/ou un caisson 15 d'ajustement des températures sont avantageusement prévus afin de régler le gradient transversal de température du revêtement composite 10 en contact avec le feutre 2 et éventuellement en débordant latéralement, et, éventuellement en outre, la température dudit feutre 2 au niveau des faces latérales et de la face supérieure, à l'emplacement où les rives du revêtement composite 10 sont destinées à être appliqués à l'aide des déflecteurs 12a, 12b.

Il est en outre avantageusement prévu, selon l'invention, de disposer, en amont du tambour d'application 11, un dispositif d'enduction de la face inférieure du ruban de feutre 2, comprenant par exemple un tambour 16 dont la partie inférieure plonge dans un bac 17 contenant un bitume fondu. Ce produit doit être compatible avec le bitume d'imprégnation du voile 3, puisqu'il est destiné à permettre un meilleur accrochage dudit voile 3 sur le feutre 2.

Aux moyens de refroidissement 13, 14 cités plus haut peuvent éventuellement s'ajouter des rampes de pulvérisation d'eau 21, 22, représentées respectivement en aval des tables 12 et 13. Des rampes analogues peuvent être disposées en outre au niveau du caisson ou de la table 15, visant à refroidir, si besoin est, la face inférieure du ruban de feutre 2, sur laquelle vient d'être appliqué le revêtement composite 10, ainsi que dans le caisson contenant le convoyeur refroidi 14.

Des moyens de réglage de la température des tambours 9 et 11, complétés éventuellement par des rampes analogues supplémentaires de pulvérisation d'eau, non représentées, disposées dans l'intervalle séparant lesdits tambours et en regard de la face du ruban composite 10 qui comporte le feuil de polyoléfine 7, sont en outre avantageusement prévus pour maîtriser la température dudit feuil 7, et celle de la partie superficielle du voile bitumé 3 qui est à son contact. Ainsi se trouvent garanties la stabilité dimensionnelle et les qualités principales dudit feuil 7.

Lorsqu'un refroidissement par projection d'eau est ainsi prévu, on disposera avantageusement en aval de ces moyens de refroidissement des moyens de séchage 23, tel qu'un caisson dans lequel est admis de l'air sec à température appropriée.

Le dispositif de l'invention comporte enfin des moyens tels qu'un massicot 24 pour la découpe du ruban revêtu en panneaux individualisés. La périodicité du mouvement du massicot 24 détermine, en fonction de la vitesse d'avancement du ruban de feutre, la seconde grande dimension du panneau, la première étant la largeur du ruban de feutre lui-même.

Un transporteur 25 évacue les panneaux 26 ainsi découpés vers les appareils d'emballage et le stockage.

Un panneau 26 ainsi fabriqué est représenté à la fig. 2, en une vue brisée en perspective de l'un de ses angles, montrant une face latérale 27, et la face 28 située au dessus du ruban de feutre lors de la mise en œuvre du procédé selon l'invention décrit ci-dessus. Cette face a subi sur ses deux rives un meulage de rectification, de manière à obtenir une surface 29 de bonne planéité, permettant au revêtement composite 10 un contact très intime avec le feutre 2, et évitant toute surépaisseur dudit revêtement composite 10 par rapport au relief préexistant de la face 28, relief dont un exemple est donné sur la figure 2. L'imprégnation du feutre 2 par le bitume est représentée par une zone superficielle ombrée, sensiblement plus épaisse en $2_i$, du côté de la face inférieure 30, lorsqu'est mis en œuvre le tambour d'imprégnation 16, que dans la région $2_e$, du côté de la face latérale 27, ou dans la région $2_s$, voisine de la surface rectifiée 29, régions dans lesquelles le bitume provient essentiellement du voile imprégné 3 mis au contact du feutre 2.

La feuille de polyéthylène 7 constituant l'agent de séparation déborde de la bande de voile imprégné 3 qui est appliquée sur la surface rectifiée 29, par exemple de manière à atteindre la partie non rectifiée de la face 28, ainsi que représenté sur la figure 2.

A titre indicatif, on donnera dans le tableau annexé les caractéristiques principales de panneaux selon l'invention, comportant:

— un feutre de laine de roche imprégné de résines formophénoliques présentant une masse volumique élevée, de l'ordre de 150 kg/m³,

— un revêtement composite constitué d'un voile de verre, de 50 g/m², imprégné de bitume oxydé 85/25 ou 100/40 (température bille et anneaux), et d'un film de polypropylène thermofusible (de température de fusion de l'ordre de 200 °C).

On attirera en particulier l'attention sur la performance au test de pelage d'étanchéité, qui montre l'avantage du revêtement composite «rebordé» des panneaux selon l'invention (force nécessaire au pelage: 90 daN/m), par rapport aux performances obtenues dans le même test par des panneaux revêtus du même revêtement composite sur une seule face (50 daN/m), ou des panneaux de feutre nu (30 daN/m). Or ce test est très représentatif des conditions réelles d'emploi des panneaux de couverture: il consiste à déterminer l'effort nécessaire à l'arrachement, à partir d'une de ses rives, par pelage, d'une chape d'étanchéité de bitume armé préalablement soudée à la flamme sur le panneau à tester.

D'autre part, le rebordement des panneaux fabriqués selon l'invention, qui permet lors de la pose, de souder bords à bords les panneaux adjacents, par ramollissement à la flamme, ou «réactivation», du bitume du revêtement composite de renforcement, confère aux joints entre panneaux une excellente tenue mécanique, et par conséquent permet de répartir de manière homogène les efforts auxquels peut être soumise la couverture confectionnée à l'aide des panneaux selon l'invention.

Sur les côtés non rebordés, selon une caractéristique complémentaire de l'invention, on peut avantageusement appliquer à chaud des bandes dudit revêtement composite préparées préalablement à cet effet, et ces bandes seront posées par exemple de façon à recouvrir des surfaces équivalentes à celles qui sont intéressées par le rebordement obtenu sur la chaîne de fabrication pour les autres côtés.

Ainsi la répartition des efforts à laquelle il est fait référence plus haut sera encore améliorée, et les difficultés résultant des pluies accidentelles au cours du chantier de pose seront grandement amoindries, l'étanchéité étant susceptible d'être obtenue sur tout le pourtour de chaque panneau, dans la mesure où le film thermofusible de séparation a été fondu et éliminé au cours de l'opération de soudure à la flamme.

De manière à assurer une complète étanchéité du panneau, l'invention prévoit également d'appliquer, sur des panneaux rebordés, un revêtement composite couvrant la seconde face principale, et les deux faces longitudinales non revêtues lors de l'opération initiale, les six faces du panneau se trouvant alors revêtues.

Outre les tests dont les résultats figurent dans le tableau annexé, on a effectué d'autres essais mettant en évidence les avantages des panneaux selon l'invention sur les panneaux de l'art antérieur, au regard de la commodité et de la fiabilité de leur mise en œuvre.

Ces avantages sont particulièrement marqués dans le test de frottement et compression (machine Lisson simulant le trafic piétonnier), et le test de poinçonnement statique.

Caractéristiques principales de panneaux selon l'invention
(épaisseurs de 30 mm)

| Caractéristiques | Unité | Moyenne |
|---|---|---|
| conductivité thermique utile | W/m.K | 0,041 |
| classement de réaction au feu (pouvoir calorifique) | J/kg | $25.10^5$ |
| affaissement correspondant à une contrainte de 0,2 daN/cm² | mm | 2 |
| tassement différé<br>— sous 400 kg/m² | mm | 0,5 |
| — sous 1000 kg/m² | mm | 1 |
| perpendiculaire aux faces | daN/cm² | 0,15 |
| absorption d'eau en immersion pendant 24 heures | % | env. 7 |
| variations dimensionnelles:<br>— en fonction de la température | mm | env. 0 |
| — en fonction de l'humidité | mm | env. 0 |
| pelage d'étanchéité | daN/m | 90 |
| effort de rupture par poinçonnement en partie non supportée de bac:<br>— nervure de 50 mm | daN | 110 |
| — nervure de 70 mm<br>(poinçon 20 × 80 mm) | daN | 100 |

## Revendications

1. Procédé de fabrication d'un panneau fibreux pour isolation et étanchéité destiné à être revêtu d'au moins un enduit ou une chappe bitumineux applicables à chaud, comportant la préparation, sous la forme d'un ruban se déplaçant en continu sur un convoyeur, d'un matelas de fibres minérales contenant un premier liant, de type thermodurcissable, finement dispersé en son sein, la mise en compression dudit matelas suivie d'un traitement assurant la prise dudit premier liant et la stabilisation de la masse volumique du feutre dense (2) ainsi obtenue, un deuxième liant, de type thermoplastique, étant ensuite apporté à la surface dudit feutre (2), sur au moins l'une de ses faces principales, et ladite face étant recouverte, au moins partiellement, d'un revêtement d'étanchéité (10) adhérant audit feutre (2) par l'intermédiaire dudit deuxième liant, ledit ruban (2) ainsi revêtu étant soumis à un refroidissement assurant le durcissement dudit deuxième liant, avant découpe éventuelle dudit ruban en panneaux unitaires, caractérisé en ce que ledit revêtement d'étanchéité (10) est préparé en continu par superposition d'un voile de renforcement (3), en ruban, préalablement imprégné à chaud à l'aide dudit deuxième liant thermoplastique, et d'un agent de séparation (7) imperméable, également en ruban, susceptible d'adhérer audit voile par l'intermédiaire dudit deuxième liant, puis en ce que ledit ruban composite d'étanchéité (10) est appliqué en continu sur au moins ladite face principale, de préférence sur l'ensemble des faces dudit ruban de feutre (2), ledit voile de renforcement (3) venant adhérer au contact de ladite face principale par l'intermédiaire dudit deuxième liant.

2. Procédé selon la revendication 1, caractérisé en ce que le feutre (2) est soumis, après stabilisation de sa masse volumique, à une opération de découpe, et éventuellement de rectification, de ses rives, permettant d'en ajuster le profil.

3. Procédé selon l'une des revendications précédentes, caractérisé en ce que ladite face principale est la face inférieure du ruban de feutre.

4. Procédé selon l'une des revendications précédentes, caractérisé en ce qu'on soumet la face du ruban de feutre destinée à recevoir le revêtement composite (10) à une imprégnation par un liant compatible avec ledit deuxième liant.

5. Procédé selon l'une des revendications précédentes, caractérisé en ce que l'agent de séparation est constitué d'un feuil (7) qui se déroule à partir d'une bobine (8), et qui, appliqué sur le voile (3) après l'imprégnation de celui-ci par le deuxième liant, est soumis à un refroidissement contrôlé avant que ledit voile imprégné ne vienne au contact du ruban de feutre (2) et des éléments du convoyeur qui entraînent ledit ruban de feutre.

6. Procédé selon la revendication précédente, caractérisé en ce que le feuil de séparation (7) présente une largeur supérieure à celle du ruban de voile imprégné (3).

7. Procédé selon la revendication précédente, caractérisé en ce que le ruban de voile imprégné (3) présente une largeur supérieure à celle du ruban de feutre (2), de manière à correspondre au bordement, ou éventuellement au rebordement, des faces latérales (27) du ruban de feutre (2), et en ce que le revêtement (10) comprenant le voile de renforcement (3) et le feuil de séparation (7) est appliqué sur les faces latérales (27), et éventuellement la deuxième face principale (28) du ruban de feutre (2), par des moyens déflecteurs (12a, 12b), pressant ledit revêtement sur les surfaces à revêtir.

8. Procédé selon l'une des revendications précédentes, caractérisé en ce qu'on règle la température de chacune des faces du voile de renforcement (3) après son imprégnation par le deuxième liant et avant la mise en contact dudit voile imprégné (3) avec respectivement l'agent de séparation (7) et le ruban de feutre (2), de manière à conserver la stabilité dimensionnelle dudit agent de séparation (7) tout en obtenant son adhérence audit voile (3), et à provoquer une adhésion intime dudit voile (3) audit feutre (2), avec éventuellement un transfert d'une partie du deuxième liant apporté par ledit voile (3), vers ledit feutre (2).

9. Procédé selon l'une des revendications précédentes, caractérisé en ce que l'on règle la température du ruban de feutre (2) porteur du revêtement composite (10) pour provoquer la stabilisation de ses dimensions par durcissement dudit deuxième liant, de type thermoplastique.

10. Procédé selon l'une des revendications précédentes, caractérisé en ce que dès la mise en contact du voile de renforcement (3) et du feuil de séparation (7) pour constituer le revêtement composite (10) on refroidit, par exemple par contact avec un support (9, 11) refroidi et/ou par projection de fluide, gaz ou liquide, ledit feuil de séparation (7) de manière à lui conserver sa stabilité dimensionnelle et son intégrité.

11. Procédé selon l'une des revendications précédentes, caractérisé en ce que ledit deuxième liant, de type thermoplastique, appartient à la famille des bitumes.

12. Procédé selon l'une des revendications précédentes, caractérisé en ce que ledit deuxième liant présente une viscosité correspondant aux propriétés préférées suivantes: «température bille et anneau» selon la norme Française T 66 008 comprise entre 70 et 100 °C et de préférence de l'ordre de 85 °C, et «pénétrabilité» selon la norme Française T 66 004 de 10 à 50, et de préférence de l'ordre de 25 (l'unité de mesure étant égale à 0,1 mm).

13. Procédé selon l'une des revendications précédentes, caractérisé en ce que le voile de renforcement (3) comporte des fibres minérales comprenant au moins une chaîne de fils de renfort, de préférence orientés selon la largeur dudit voile (3) en ruban.

14. Procédé selon l'une des revendications précédentes, caractérisé en ce que les fibres minérales du voile de renforcement (3) présentent un diamètre compris entre 6 et 20 micromètres, la masse spécifique dudit voile (3) étant comprise entre 30 et 200 g/m², de préférence entre 50 et 100 g/m², et ledit deuxième liant étant un bitume, sa teneur est comprise entre 1000 et 2000 g/m² de surface imprégnée et de préférence entre 1300 et 1500 g/m².

15. Procédé selon l'une des revendications précédentes, caractérisé en ce que le premier liant est du type phénol-formaldéhyde.

16. Procédé selon l'une des revendications précédentes, caractérisé en ce que le feutre présente une masse volumique de 120 à 250 kg/m³, de préférence de l'ordre de 150 kg/m³.

17. Procédé selon l'une des revendications précédentes, caractérisé en ce que l'agent de séparation (7) est en une matière thermoplastique de bonne stabilité dimensionnelle jusqu'à une température au moins égale à la température «bille et anneau» dudit deuxième liant, et fusible à une température permettant le nappage de l'enduit bitumé d'étanchéité applicable à chaud à utiliser après mise en place définitive des panneaux sur la toiture à traiter.

18. Procédé selon la revendication précédente, caractérisé en ce que ladite matière thermoplastique est soluble, ou au moins miscible dans ledit deuxième liant ou dans ledit enduit bitumé.

19. Procédé selon l'une des revendications 17 et 18, caractérisé en ce que ladite matière thermoplastique appartient à la famille des polyoléfines, et est de préférence choisie parmi les polyéthylènes et polypropylènes de basses et moyennes densités, l'agent de séparation (7) se présentant sous forme d'un feuil ou pellicule, de préférence d'épaisseur comprise entre 5 et 20 micromètres.

20. Procédé selon l'une des revendications 7 à 19, caractérisé en ce que le matelas de feutre (2) présente un manque de matière à l'emplacement (29) prévu pour le rebordement des rives de la seconde face principale (28), l'épaisseur du manque de matière correspondant sensiblement à celle dudit revêtement composite (10).

21. Dispositif pour la fabrication en continu de panneaux fibreux pour isolation et étanchéité de toitures destinés à être revêtus, après pose sur le toit à traiter, d'au moins un enduit ou une chape bitumineux applicables à chaud, comprenant un convoyeur (1) sensiblement horizontal, par exemple à rouleaux, pour amener en continu un ruban de feutre dense (2) vers un poste (11, 12) d'application d'un ruban de revêtement d'étanchéité (10), comportant un tambour d'application (11), des moyens conformateurs (12, 12a, 12b) et des moyens de refroidissement (13, 14, 21, 22) permettant d'obtenir la stabilisation dimensionnelle du ruban (2) porteur du revêtement (10), des moyens de découpe tels qu'un massicot (24) pour assurer la découpe du ruban revêtu en panneaux individualisés (26), et un convoyeur (25) évacuant lesdits panneaux (26), caractérisé en ce que ledit tambour d'application (11) est disposé au-dessous de la face inférieure dudit ruban de feutre (2), et est muni de moyens d'alimentation (4, 8) en un ruban de voile de fibres minérales (3) imprégné de liant thermoplastique tel que bitume et en un ruban d'agent de séparation (7), constituant en combinaison un ruban composite de revêtement (10) s'interposant entre ledit ruban de feutre (2) et ledit tambour d'application (11) lui servant de support, ledit voile imprégné (3) et ledit agent de séparation (7) venant au contact, respectivement, dudit ruban (2) et dudit tambour (11).

22. Dispositif selon la revendication 21, caractérisé en ce qu'il comporte en amont du tambour d'application (11), des moyens d'imprégnation (16, 17) en bitume de la face inférieure du ruban de feutre (2).

23. Dispositif selon l'une des revendications 21 et 22, caractérisé en ce que les moyens conformateurs comportent des déflecteurs (12a, 12b) permettant de relever les rives du ruban composite (10) débordant des rives du ruban de feutre (2) pour les appliquer sur les faces latérales (27) dudit ruban de feutre (2), et éventuellement sur les bords (29) de sa face supérieure (28).

24. Dispositif selon l'une des revendications 21 à 23, caractérisé en ce que lesdits moyens de refroidissement comportent des moyens de pulvérisation d'eau (21, 22).

25. Dispositif selon la revendication 24, caractérisé en ce qu'il comporte des moyens de séchage (23) disposés en aval des moyens de pulvérisation d'eau (21, 22).

26. Dispositif selon l'une des revendications 21 à 25, caractérisé en ce qu'il comporte des moyens (15), pour l'ajustement des températures du revêtement composite (10) dans le sens transversal, disposés entre le tambour d'application (11) et les moyens conformateurs (12, 12a, 12b).

27. Dispositif selon l'une quelconque des revendications 21 à 26, caractérisé en ce qu'il comporte un tambour (9), distinct du tambour d'application (11), pour l'application du ruban (7) d'agent de séparation sur le ruban (3) de voile imprégné de bitume.

28. Dispositif selon l'une des revendications 21 à 26, caractérisé en ce qu'il comporte des moyens de projection d'un fluide, gaz ou liquide, en direction de la face du ruban composite (10) porteuse du ruban (7) d'agent de séparation, la température dudit fluide étant réglée pour éviter un échauffement excessif dudit agent (7) et lui conserver sa stabilité dimensionnelle et son intégrité.

## Claims

1. Method of producing a fibrous panel for insulation and sealing tightness, intended to be surfaced with at least one coating or bituminous covering which can be applied under heat, including the preparation in the form of a strip which moves continuously on a conveyor of a mineral fibre mat containing a first binder of the thermosetting type, finely dispersed within it, the compression of the said mat followed by a treatment intended to set the first binder and to stabilise the volumetric mass of the resultant dense felt (2), a second binder of the thermoplastics type being then applied to the surface of the said felt (2), on at least one of its principal faces, and the said face being at least partially covered with a sealing tight surfacing (10) adhering to the said felt (2) through the medium of the said second binder, the strip (2) thus surfaced being subjected to a cooling process to harden the second binder, before the said strip is possibly cut into unitary panels, characterised in that the said sealing tight surfacing (10) is prepared continuously by superposition of a reinforcing film (3) in strip form, previously impregnated under heat with the said second thermoplastics binder, and a likewise strip-form impermeable separating agent (7) adapted to adhere to the said film through the medium of the said second binder, then in that the said composite sealing tight strip (10) is applied continuously to at least the said principal face and preferably to all the faces of the said felt strip (2), the said reinforcing film (3) adhering to contact of the said principal face through the medium of the said second binder.

2. Method according to Claim 1, characterised in that the felt (2), after its volumetric mass has been stabilised, being subjected to a cutting operation and possibly an operation for straightening its edges, for adjustment of the profile thereof.

3. Method according to one of the preceding Claims, characterised in that the said principal face is the underside of the felt strip.

4. Method according to one of the preceding Claims, characterised in that the face of the felt strip which is intended to receive the composite surface (10) is subjected to impregnation with a binder compatible with the said second binder.

5. Method according to one of the preceding Claims, characterised in that the separating agent consists of a film (7) which is unrolled from a spool (8) and which, applied to the film (3) after this latter has been impregnated with the second binder, is subjected to controlled cooling before the impregnated film comes in contact with the felt strip (2) and elements of the conveyor which carry the said felt strip.

6. Method according to the preceding Claim, characterised in that the separating film (7) has a width exceeding that of the impregnated film strip (3).

7. Method according to the preceding Claim, characterised in that the impregnated film strip (3) has a width exceeding that of the felt strip (2) in such a way as to provide an edging or possibly a re-edging of the lateral faces (27) of the felt strip (2), and in that the surfacing material (10) comprising the reinforcing film (3) and the separating film (7) is applied to the lateral faces (27) and possibly the second principal face (28) of the felt strip (2), by deflector means (12a, 12b) pressing the said surfacing material onto the surfaces which are to be covered.

8. Method according to one of the preceding Claims, characterised in that the temperature of each of the faces of the reinforcing film (3) after it has been impregnated with the second binder and before the said impregnated film (3) comes in contact with the separating agent (7) and the felt strip (2) respectively is controlled in such a way as to conserve the dimensional stability of the said separating agent (7) while causing it to adhere to the said film (3) and produce an intimate adhesion of the said film (3) to the said felt (2), possibly with transfer of part of the second binder carried by the said film (3) to the said felt (2).

9. Method according to one of the preceding Claims, characterised in that the temperature of the felt strip (2) carrying the composite surfacing material (10) is regulated in such a way as to stabilise its dimensions by hardening of the said second binder which is of the thermoplastics type.

10. Method according to one of the preceding Claims, characterised in that as soon as the reinforcing film (3) and the separating film (7) are brought into contact to constitute the composite surfacing material (10), the said separating film (7) is cooled for instance by contact with a cooled backing (9, 11) and/or by being sprayed with a gaseous or liquid medium, in such a way as to retain its dimensional stability and its integrity.

11. Method according to one of the preceding Claims, characterised in that the said second binder, of the thermoplastics type, belongs to the bitumen group.

12. Method according to one of the preceding Claims, characterised in that the said second binder has a viscosity corresponding to the following preferred properties: "ball and ring temperature" according to French Standard T 66 008 comprised between 70 and 100 °C and preferably around 85 °C, and "penetrability" according to French Standard T 66 004 of 10 to 50 and preferably around 25 (the unit of measurement being equal to 0.1 mm).

13. Method according to one of the preceding Claims, characterised in that the reinforcing film (3) comprises mineral fibres containing at least one reinforcing warp thread, preferably orientated according to the width of the said strip film (3).

14. Method according to one of the preceding Claims, characterised in that the mineral fibres of the reinforcing film (3) have a diameter of between 6 and 20 microns, the specific mass of the said film (3) being between 30 and 200 $g/m^2$ and preferably between 50 and 100 $g/m^2$, and the said second binder being a bitumen, its content being between 1000 and 2000 $g/m^2$ of impregnated surface area and preferably between 1300 and 1500 $g/m^2$.

15. Method according to one of the preceding Claims, characterised in that the first binder is of the phenol formaldehyde type.

16. Method according to one of the preceding Claims, characterised in that the felt has a volumetric mass of 120 to 250 $kg/m^3$ and preferably of around 150 $kg/m^3$.

17. Method according to one of the preceding Claims, characterised in that the separating agent (7) consists of a thermoplastics material of good dimensional stability up to a temperature at least equal to the "ball and ring" temperature of the said second binder and adapted to melt at a temperature which allows the bituminous sealing tight coating to be applied under heat after the panels have been finally placed on the roofing which is to be treated.

18. Method according to the preceding Claim, characterised in that the said thermoplastics material is soluble or at least miscible in the said second binder or in the said bituminous coating.

19. Method according to one of Claims 17 and 18, characterised in that the said thermoplastics material belongs to the group of polyolefins, and is preferably chosen from among the low and medium density polyethylenes and polypropylenes, the separating agent (7) taking the form of a film preferably between 5 and 20 microns thick.

20. Method according to one of Claims 7 to 19, characterised in that the felt mat (2) has a lack of positioning substance (29) for making the edges of the second principal face (28), the thickness of the lack of material corresponding substantially to that of the composite surfacing material (10).

21. Apparatus for the continuous production of fibrous panels for insulating and sealing roofing which, after the panels have been laid on the roof to be treated, are intended to be covered with at least one bituminous surfacing or coating material applicable under heat, the apparatus comprising a substantially horizontal conveyor (1) for example a roller conveyor, for continuously carrying a strip of dense felt (2) to a station (11, 12) for applying a strip of sealing tight surfacing material (10), comprising an applicator drum (11) shaping means (12, 12a, 12b) and cooling means (13, 14, 21, 22) which make it possible to obtain dimensional stability in the strip (2) carrying the surfacing material (10), cutting means such as a guillotine (24) for cutting the coated strip into individual panels (26) and a conveyor (25) for carrying away the said panels (26), characterised in that the said applicator drum (11) is disposed beneath the underside of the said felt strip (2) and is provided with means (4, 8) for supplying a strip of mineral fibres (3) impregnated with thermoplastics binder such as bitumen and a strip of separating agent (7), which in conjunction with each other constitute a composite surfacing strip (10) to be interposed between the said felt strip (2) and the said applicator drum (11) which serves to carry it, the said impregnated film (3) and the said separating agent (7) coming in contact respectively with the said strip (2) and the said drum (11).

22. Apparatus according to Claim 21, characterised in that it comprises upstream of the applicator drum (11) means (16, 17) for impregnating the underside of the felt strip (2) with bitumen.

23. Apparatus according to one of Claims 21 and 22, characterised in that the shaping means comprise deflectors (12a, 12b) which make it possible to lift the edges of the composite strip (10) which overhang the edges of the felt strip (2) so that they can be applied to the lateral faces (27) of the said felt strip (2) and possibly to the edges (29) of its upper face (28).

24. Apparatus according to one of Claims 21 to 23, characterised in that the said cooling means comprise water spraying means (21, 22).

25. Apparatus according to Claim 24, characterised in that it comprises drying means (23) disposed downstream of the water spraying means (21, 22).

26. Apparatus according to one of Claims 21 to 25, characterised in that it comprises means (15) for adjusting the temperatures of the composite surfacing material (10) in the transverse direction, disposed between the applicator drum and the shaping means (12, 12a, 12b).

27. Apparatus according to any one of Claims 21 to 26, characterised in that it comprises a drum (9) other than the applicator drum (11) for applying the strip (7) of separating agent to the strip (3) of bitumen impregnated film.

28. Apparatus according to one of Claims 21 to 26, characterised in that it comprises means of spraying a gaseous or liquid medium in the direction of that surface of the composite strip (10) which carries the strip (7) of separating agent, the temperature of the said medium being regulated to avoid excessive heating of the said agent (7) and allowing it to retain its dimensional stability and integrity.

**Patentansprüche**

1. Verfahren zur Herstellung einer Faserplatte für die Dämmung und Abdichtung, welche dazu bestimmt ist, von wenigstens einem bituminösen Überzug oder einer bituminösen Abdeckung überdeckt zu sein, welche warm aufbringbar sind, welches umfasst die Vorbereitung einer Mineralfasermatte in Form eines sich kontinuierlich auf einem Förderer bewegenden Bandes, welche ein erstes Bindemittel des wärmeaushärtbaren Typs enthält, das in seinem Inneren fein verteilt ist, die Unter-Druck-Setzung der Matte gefolgt von einer Behandlung, die die Wirkung des ersten Bindemittels und die Stabilisierung der Rohdichte des so erhaltenen dichten Filzes (2) gewährleistet, das anschliessende Aufbringen eines zweiten Bindemittels des thermoplastischen Typs, auf die Oberfläche des Filzes (2) an wenigstens einer seiner Hauptflächen, und das wenigstens teilweise Abdecken der Hauptfläche mit einem abdichtenden Überzug (10), der an dem Filz (2) mittels des zweiten Bindemittels anhaftet, wobei das so überzogene Band (2) einer Abkühlung unterworfen wird, welche die Aushärtung des zweiten Bindemittels gewährleistet, vor einem eventuellen Abschneiden des Bandes in einzelne Platten, dadurch gekennzeichnet, dass der abdichtende Überzug (10) kontinuierlich durch Überlagerung einer Verstärkungsbahn (3), in Bandform, die vorher unter Wärme mit Hilfe des zweiten thermoplastischen Bindemittels imprägniert wurde, und eines undurchlässigen Trennmittels (7), ebenfalls in Bandform hergestellt wird, welches geeignet ist, mittels des zweiten Bindemittels an der Bahn anzuhaften, und dass das abdichtende Verbundband (10) kontinuierlich auf wenigstens die genannte Hauptfläche, vorzugsweise auf alle Flächen des Filzbandes (2) aufgebracht wird, wobei die Verstärkungsbahn (3) mittels des zweiten Bindemittels bei Berührung der Hauptfläche anhaftet.

2. Verfahren nach Anspruch 1, daduch gekennzeichnet, dass der Filz (2) nach Stabilisation seiner Rohdichte einem Abtrennvorgang und gegebenenfalls einem Ausrichtvorgang seiner Seiten unterworfen wird, was ein Einstellen seines Profils erlaubt.

3. Verfahren nach einem der vorhergehenden Ansprüche, dadurch gekennzeichnet, dass die Hauptfläche die Unterseite des Filzbandes ist.

4. Verfahren nach einem der vorhergehenden Ansprüche, dadurch gekennzeichnet, dass die zur Aufnahme des Verbundüberzugs (10) bestimmte Seite des Filzbandes einer Imprägnierung durch ein Bindemittel unterworfen wird, welches mit dem zweiten Bindemittel verträglich ist.

5. Verfahren nach einem der vorhergehenden Ansprüche, dadurch gekennzeichnet, dass das Trennmittel aus einer Folie (7) gebildet ist, die von einer Spule (8) abrollt, und die, nachdem sie auf die Bahn (3) nach deren Imprägnierung durch das zweite Bindemittel aufgebracht ist, einer gesteuerten Abkühlung unterworfen wird, bevor die imprägnierte Bahn in Kontakt mit dem Filzband (2) und den Förderelementen kommt, die das Filzband bewegen.

6. Verfahren nach vorhergehendem Anspruch, dadurch gekennzeichnet, dass die Trennfolie (7) eine Breite aufweist, die grösser ist als jene der imprägnierten bandförmigen Bahn (3).

7. Verfahren nach dem vorhergehenden Anspruch, dadurch gekennzeichnet, dass die imprägnierte bandförmige Bahn (3) eine Breite aufweist, die grösser ist als jene der Filzbahn (2), derart dass sie dem Hochschlagen oder eventuell dem Zurückschlagen an den Seitenflächen (27) des Filzbandes (2) entspricht, und dass der Überzug (10), der die Verstärkungsbahn (3) und die Trennfolie (7) umfasst, auf die Seitenflächen (27) und eventuell auf die zweite Hauptfläche (28) des Filzbandes (2) durch Umlenkeinrichtungen (12a, 12b) aufgebracht wird, die den Überzug auf die zu überziehenden Flächen drückt.

8. Verfahren nach einem der vorhergehenden Ansprüche, dadurch gekennzeichnet, dass die Temperatur einer jeden der Seiten der Verstärkungsbahn (3) nach deren Imprägnierung durch das zweite Bindemittel und vor der Berührung der imprägnierten Bahn (3) mit dem Trennmittel (7) bzw. der Filzbahn (2) derart geregelt wird, um die Dimensionsstabilität der Trennfolie (7) beizubehalten, wobei seine Anhaftung an die Bahn (3) erhalten wird, und um eine innige Anhaftung der Bahn (3) an dem Filz (2) hervorzurufen, mit einem eventuellen Übertrag des zweiten Bindemittels, das von der Bahn (3) herangebracht wird, auf den Filz (2).

9. Verfahren nach einem der vorhergehenden Ansprüche, dadurch gekennzeichnet, dass die Temperatur des Filzbandes (2) als Träger des Verbundüberzugs (10) geregelt wird, um eine Dimensionsstabilisierung durch Aushärtung des zweiten Bindemittels vom thermoplastischen Typ zu erzielen.

10. Verfahren nach einem der vorhergehenden Ansprüche, dadurch gekennzeichnet, dass die Trennfolie (7) nach dem Berühren der Verstärkungsbahn (3) und der Trennfolie (7) zum Bilden des Verbundüberzugs (10), beispielsweise durch Berührung mit einer gekühlten Abstützung (9, 11) und/oder durch Aufbringen eines Fluids, eines Gases oder einer Flüssigkeit, derart abgekühlt wird, dass sie ihre Dimensionsstabilität und Integrität erhält.

11. Verfahren nach einem der vorhergehenden Ansprüche, dadurch gekennzeichnet, dass das zweite Bindemittel vom thermoplastischen Typ der Gruppe der Bitumen entstammt.

12. Verfahren nach einem der vorhergehenden Ansprüche, dadurch gekennzeichnet, dass das zweite Bindemittel eine Viskosität aufweist, die den folgenden bevorzugten Eigenschaften entspricht: «température bille et anneau» entsprechend der französischen Norm T 66 008 zwischen 70° und 100 °C und vorzugsweise in der Grössenordnung von 85 °C, und «pénétrabilité» (Eindringtiefe) gemäss der französischen Norm T 66 004 von 10 bis 50, und vorzugsweise in der Grössenordnung von 25 (die Messeinheit ist gleich 0,1 mm).

13. Verfahren nach einem der vorhergehenden Ansprüche, dadurch gekennzeichnet, dass die Verstärkungsbahn (3) Mineralfasern aufweist, die wenigstens eine Kette von Verstärkungsfäden aufweist, die vorzugsweise in Richtung der Breite der Bahn (3) in Bandform ausgerichtet sind.

14. Verfahren nach einem der vorhergehenden Ansprüche, dadurch gekennzeichnet, dass die Mineralfasern der Verstärkungsbahn (3) einen Durchmesser zwischen 6 und 20 µm aufweisen, wobei das Flächengewicht der Bahn (3) zwischen 30 und 200 g/m², vorzugsweise zwischen 50 und 100 g/m² liegt und das zweite Bindemittel ein Bitumen ist, wobei sein Gehalt zwischen 1000 und 2000 g/m² der imprägnierten Oberfläche und vorzugsweise zwischen 1300 und 1500 g/m² liegt.

15. Verfahren nach einem der vorhergehenden Ansprüche, dadurch gekennzeichnet, dass das erste Bindemittel vom Typ Phenol-Formaldehyd ist.

16. Verfahren nach einem der vorhergehenden Ansprüche, dadurch gekennzeichnet, dass der Filz eine Rohdichte von 120 bis 250 kg/m³ vorzugsweise in der Grössenordnung von 150 kg/m³ aufweist.

17. Verfahren nach einem der vorhergehenden Ansprüche, dadurch gekennzeichnet, dass die Trennfolie (7) aus einem thermoplastischen Material von guter Dimensionsstabilität bis zu einer Temperatur von wenigstens gleich der Temperatur «bille et anneau» des zweiten Bindemittels, und schmelzbar ist bei einer Temperatur, wie sie das Aufbringen des bituminösen Dichtungsüberzugs erlaubt, der warm auftragbar ist, wie er nach endgültiger Anbringung der Platten auf dem zu behandelnden Dach zu verwenden ist.

18. Verfahren nach vorherigem Anspruch, dadurch gekennzeichnet, dass das thermoplastische Material löslich oder wenigstens in dem zweiten Bindemittel oder dem Bitumenüberzug mischbar ist.

19. Verfahren nach Anspruch 17 oder 18, dadurch gekennzeichnet, dass das thermoplastische Material aus der Gruppe der Poly-Olefine stammt und vorzugsweise aus den Polyäthylenen und Polypropylenen von niedriger oder mittlerer Dichte gewählt ist, wobei das Trennmittel (7) in Form einer Folie oder einer dünnen Haut vorliegt, vorzugsweise mit einer Dicke zwischen 5 und 25 µm.

20. Verfahren nach einem der Ansprüche 7 bis 19, dadurch gekennzeichnet, dass die Filzmatte (2) an derjenigen Stelle (29) eine Materialaussparung aufweist, die für das Zurückschlagen auf die Ränder der zweiten Hauptfläche (28) vorgesehen ist, wobei die Dicke der Materialaussparung im wesentlichen der des Verbundüberzugs (10) entspricht.

21. Vorrichtung für die kontinuierliche Herstellung von Faserplatten zur Wärmedämmung und Abdichtung von Dächern, welche dazu bestimmt sind, nach Ablegen auf dem zu behandelnden Dach, mit mindestens einem Überzug pro einer Abdeckung aus Bitumen, welche warm aufbringbar sind, überdeckt zu werden, mit einem im wesentlichen horizontalen Förderer (1) beispielsweise einem Rollenförderer, um kontinuierlich ein Band aus dichtem Filz (2) einer Aufbringstation (11, 12) eines Dichtungsüberzugsbandes (10) zuzuführen, welche eine Andruckwalze (11), Anlegeeinrichtungen (12, 12a, 12b) und Abkühleinrichtungen (13, 14, 21, 22) aufweist, die eine Dimensionsstabilisierung des Trägerbandes (2) des Überzugs (10) erlauben, einer Trennschneideeinrichtung wie eine Trennsäge (24), um das Schneiden des überzogenen Bandes in einzelne Platten (26) zu gewährleisten, und einem Förderer (25) welcher die Platten (26) ausbringt, dadurch gekennzeichnet, dass die Andruckwalze (11) unterhalb der Unterseite des Filzbandes (2) angeordnet ist und mit einer Zuführeinrichtung (4, 8) eines Folienbandes (3) aus Mineralfasern versehen ist, die mit einem thermoplastischen Bindemittel wie Bitumen imprägniert sind, und eines Trennfolienbandes (7), welche in Kombination ein Überzugverbundband (10) bilden, das sich zwischen das Filzband (2) und die Andruckwalze (11) legt, die ihm als Abstützung dient, wobei die imprägnierte Bahn (3) und das Trennmittel (7) in Berührung mit dem Band (2) bzw. der Walze (11) kommen.

22. Vorrichtung nach Anspruch 21, dadurch gekennzeichnet, dass sie in Förderrichtung vor der Andruckwalze (11) Imprägniereinrichtungen (16, 17) von Bitumen auf die Unterseite des Filzbandes (2) aufweist.

23. Vorrichtung nach Anspruch 21 oder 22, dadurch gekennzeichnet, dass die Anlegeeinrichtungen Umlenkelemente (12a, 12b) aufweisen, die ein Heben der Ränder bzw. Kanten des Verbundbandes (10) erlauben, die über die Ränder des Filzbandes (2) überstehen, um sie auf die Seitenflächen (27) des Filzbandes (2) und eventuell auf die Seiten (29) der Oberseite (28) aufzubringen.

24. Vorrichtung nach einem der Ansprüche 21 bis 23, dadurch gekennzeichnet, dass die Abkühleinrichtungen Sprüheinrichtungen für Wasser (21, 22) aufweisen.

25. Vorrichtung nach Anspruch 24, dadurch gekennzeichnet, dass sie eine Trocknungseinrichtung (23) aufweist, welche in Förderrichtung nach den Sprüheinrichtungen (21, 22) angeordnet ist.

26. Vorrichtung nach einem der Ansprüche 21 bis 25, dadurch gekennzeichnet, dass sie eine Einrichtung (15) zum Einstellen der Temperaturen des Verbundüberzugs (10) in Querrichtung aufweist, die zwischen der Andruckwalze (11) und den Anlegeeinrichtungen (12, 12a, 12b) angeordnet sind.

27. Vorrichtung nach einem der Ansprüche 21 bis 26, dadurch gekennzeichnet, dass sie eine Walze (9) aufweist, welche gegenüber der Andruckwalze (11) zusätzlich für das Aufbringen des Trennmittelbandes (7) auf die mit Bitumen imprägnierte Bahn (3) angeordnet ist.

28. Vorrichtung nach einem der Ansprüche 21 bis 26, dadurch gekennzeichnet, dass sie eine Einrichtung zum Aufbringen eines Fluides, eines Gases oder einer Flüssigkeit, in Richtung der Seite des Verbundbandes (10) aufweist, welche das Trennmittelband (7) trägt, wobei die Temperatur des Fluides gesteuert wird, um ein exzessives Aufheizen des Mittels (7) zu verhindern und ihm seine Dimensionsstabilität und seine Integrität zu erhalten.

FIG.1

FIG.2

EP 0 109 879 B1